(19) Europäisches Patentamt / European Patent Office / Office européen des brevets

(11) **EP 2 027 434 B1**

(12) **EUROPÄISCHE PATENTSCHRIFT**

(45) Veröffentlichungstag und Bekanntmachung des Hinweises auf die Patenterteilung:
**01.10.2014   Patentblatt 2014/40**

(21) Anmeldenummer: **07725688.1**

(22) Anmeldetag: **31.05.2007**

(51) Int Cl.:
*G01B 11/24* (2006.01)   *G01B 11/30* (2006.01)

(86) Internationale Anmeldenummer:
**PCT/EP2007/004800**

(87) Internationale Veröffentlichungsnummer:
**WO 2007/140915 (13.12.2007 Gazette 2007/50)**

(54) **VERFAHREN UND VORRICHTUNG ZUR BESTIMMUNG VON FORMABWEICHUNGEN UND WELLIGKEITEN AN STETIGEN FREIFORMFLÄCHEN**

METHOD AND APPARATUS FOR DETERMINING DEVIATIONS IN SHAPE AND UNDULATION IN CONTINUOUS FREEFORM SURFACES

PROCÉDÉ ET DISPOSITIF POUR DÉTERMINER DES ÉCARTS DE FORME ET DES ONDULATIONS SUR DES SURFACES DE FORMAGE LIBRE CONTINUES

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **02.06.2006   DE 102006027107**

(43) Veröffentlichungstag der Anmeldung:
**25.02.2009   Patentblatt 2009/09**

(73) Patentinhaber: **Innovent e.V.**
**07745 Jena (DE)**

(72) Erfinder:
• **GROSSMANN, Marco**
**07616 Rodigast (DE)**

• **HEHL, Karl**
**07743 Jena (DE)**
• **HERTZSCH, Albrecht**
**07745 Jena (DE)**
• **KRÖGER, Knut**
**07745 Jena (DE)**

(74) Vertreter: **Pfeiffer, Rolf-Gerd**
**Patentanwaltsbüro**
**Pfeiffer & Kollegen**
**Engelplatz 11**
**07743 Jena (DE)**

(56) Entgegenhaltungen:
**WO-A-03/056305     US-A- 5 424 834**

## Beschreibung

Die Erfindung betrifft ein Verfahren und eine grundsätzliche Vorrichtung zur Bestimmung von Formabweichungen und Welligkeiten an stetigen Freiformflächen, worunter die Vermessung langwelliger Strukturen an gekrümmten Oberflächen wie z.B. Asphären, Zylinderabschnitten oder langwellig verformten Ebenen zu verstehen ist.

Optisch und mechanisch tastende Abstandsmessungen zur Erfassung der Profilform sowie der Mikrogeometrie von Oberflächen besitzen den Nachteil, dass Messfehler wie z.B. Führungsbahnfehler des Messkopfs bzw. des Prüflings beim Abtasten sowie Schwingungen des Messkopfes bzw. des Prüflings die Messergebnisse stark beeinflussen. Somit müssen Messbedingungen gewährleistet werden, die für hochpräzise Messungen nur im Labor bei niedrigen Messgeschwindigkeiten zu erzielen sind. Ein weiterer Nachteil von Abstandsmessungen ist der lineare Zusammenhang von Messbereich und vertikalem Auflösungsvermögen. Sind Freiformflächen hinsichtlich ihrer Formabweichung und Welligkeit zu charakterisieren, müssen aufwendige Zoom-Verfahren eingesetzt werden, um Profilmessungen mit unterschiedlichem Messbereich und Auflösungsvermögen zu einem Gesamtprofil zu verknüpfen.

Zur berührungslosen Vermessung optisch glatter Freiformflächen, d.h. die Rauheitsamplituden der Oberflächenmikrostruktur des Prüflings sind wesentlich kleiner als die Wellenlänge des Messlichtbündels, werden deshalb vorrangig interferometrische Verfahren als Prüfverfahren eingesetzt. Sie nutzen die Wellenlänge des Lichtes als Kalibriermaßstab und messen optische Weglängendifferenzen mit hoher Genauigkeit. Dabei überlagert man eine bekannte Referenzwelle mit der vom Prüfling üblicherweise deformierten Welle, welches zu Interferenzerscheinungen führt. Anhand der abgebildeten Interferenzmaxima und -minima können Abweichungen des Prüflings von der Sollform bestimmt werden. Voraussetzung ist, dass Prüf- und Referenzwelle nicht stark voneinander abweichen, da sonst eine Vielzahl von Interferenzstreifen entstehen, die bei einer Abbildung nicht mehr auflösbar sind. Um komplexe Formen genau zu vermessen, werden Formreferenzen, so genannte Nulllinsen, gefertigt. Jedoch ist die Fertigung solcher Nulllinsen teuer und erfordert für jede neue Linsenform eine anzufertigende Referenz. Damit eignet sich das Prüfverfahren nur bei der Massenproduktion optischer Komponenten. Einen flexibleren Einsatz der Interferometrie in der Asphärenprüfung ermöglicht die Verwendung von diffraktiver Nullkompensatoren (computergenerierte Hologramme CHG [vgl. z.B. Reichelt, S., Pruss, C., Tiziani, H.J.: Absolute interferometric test of aspheres by use of twin computer-generated holograms, Appl. Optics Vol. 42(22), p. 4468-4479,2003]).

Die Herstellung solcher CHG's ist jedoch ebenfalls zeit- und kostenaufwendig. Weiterhin sind diese interferometrischen Verfahren auf optisch glatte Oberflächen beschränkt.

Profilometrische Verfahren sind häufig dadurch gekennzeichnet, dass sich das Messsignal aus dem lokalen Höhenwert und der lokalen Oberflächenneigung zusammensetzt. Um den Einfluß des Neigungssignals auf das Höhensignal zu minimieren, werden verschiedene Verfahren beschrieben, die das Neigungssignal anhand der Reflexion eines Messstrahls erfassen und zur Korrektur der Höhensignale verwenden. So wird in US 5,424,834 ein optischer Abstandssensor beschrieben, der mit Hilfe eines Einstrahleflexionssensors die lokale Oberflächenneigung erfasst und mit Hilfe dieses Signals das Höhensignal korrigiert. In der Patentanmeldung WO 03/056305 A1 wird ein optisches Profilometer beschrieben, dass mit Hilfe von zwei schräg zur Oberflächennormale eingestrahlten Beleuchtungsstrahlen unterschiedlicher Einfallswinkel ein Höhenprofil ermittelt. Dabei wird vorzugsweise der Prüfling unter Einfallswinkeln beleuchtet, die den gleichen Betrag aber unterschiedliches Vorzeichen haben, wobei die Trennung von einfallendem und an der Prüflingsoberfläche reflektiertem Licht durch Ausnutzung definierter Polarisationszustände mit Hilfe von Strahlteilerelementen realisiert wird: Eine andere dort vorgeschlagene technische Realisierung ist die Messung in zwei unterschiedlichen Einfallsebenen, wobei die Signale durch Projektion in die Bezugsebene in einen parallelen und einen senkrechten Anteil aufgespalten werden. In beiden Ausführungsformen wird durch geeignete Summen- bzw. Differenzbildung die Neigungsinformation von der Höheninformation getrennt und ausschließlich mit dem Höhensignal oder dem Neigungssignal das Profil rekonstruiert. Bei der Nutzung des Höhensignals führen mechanische Störgrößen sowie optisches Rauschen durch die Summenbildung der Signale zu Fehlerquellen. Weiterhin wird eine Wichtung der Signale durch den Einfallswinkel verursacht. Ist der Einfallswinkel hoch, werden verstärkt Höhenunterschiede des Profils gemessen, während bei kleineren Einfallswinkeln die Profilneigung verstärkt im Signal abgebildet wird. Durch die Projektion in die zwei Bezugsebenen werden die Signale der beiden Messstrahlen mit unterschiedlicher Empfindlichkeit bezogen auf das Höhen- und Neigungssignal miteinander verknüpft und somit sind die Messwerte von dem Signal mit der niedrigsten Empfindlichkeit abhängig. Hochgenaue Formabweichungsmessungen und Bestimmungen der Welligkeit sind somit nicht möglich.

Eine ultra-präzise Vermessung der lokalen Flächenneigung und Topographie schwach gekrümmter Flächen ermöglicht die "Extended Shear Angle Difference" Messung (z.B. DE 198 42 190 C1, DE 198 33 269 C1). Dieses Verfahren beruht auf der Deflexionsmessung, wobei lokale Flächenneigungen an zwei Punkten der Tastbahn mit lateralem Versatz aufgenommen werden. Mathematische Algorithmen (Elster,C., Weingärtner,I. Solution to the shearing problem, Applied Optics Vol. 38 (1999), No. 23, S. 5024-5031) ermöglichen die Rekonstruktion der lokalen Flächenneigungen aus zwei Sätzen von Differenzwinkeldaten. Die Topographie ermittelt man mit einer Integrationsprozedur. Diese hochgenaue Messung ist jedoch entweder auf schwach gekrümmte Oberflächen beschränkt, da beide Messstrahlen nur innerhalb von kleinen Aperturen erfasst werden, oder muss durch eine Messkopfschwenkung kompensiert werden, die zu einer unbekannten Verschiebung der Messpunkte bezogen auf ein äquidistantes Abtastraster führt. Weiterhin lassen sich mit dieser Anordnung nur glatte, hochreflektierende Oberflächen vermessen. Um mit den oben beschriebenen Neigungsmessverfahren ein Profilverlauf zu ermitteln, muss über die lokalen Neigungsmessdaten aufintegriert werden, welches bei einem Rauschen der Messergebnisse zu langwelligen Formabweichungen führt (siehe: Knauer,M.C., Bothe,T., Lowitzsch,S., Jüptner,W., Häusler,G. Höhe, Neigung oder Krümmung? DgaO-Proceedings 107, 2006).

Aufgabe vorliegender Erfindung ist es, ein Verfahren und dafür geeignete Vorrichtung anzugeben, die die kontaktlose und schnelle Bestimmung und Vermessung von Formabweichungen und Welligkeiten an stetigen Freiformflächen derart ermöglicht, dass eine hohe Genauigkeit im nm-Bereich erzielt wird, die sonst nur beschränkt bspw. mit interferometrischen Verfahren und dazu zum Einsatz gelangender Vorrichtungen erreicht werden kann.

Die Aufgabe wird durch die Merkmale der unabhängigen Patentansprüche 1 und 3 gelöst, wobei vorteilhafte Ausgestaltungen Gegenstand der jeweils nachgeordneten Ansprüche sind. Im Rahmen der Erfindung wird die zu untersuchende Oberfläche mit zwei Messlichtbündeln unter definierten aber unterschiedlichen Einfallswinkeln $\Theta_{i,1}$ und $\Theta_{i,2}$ beleuchtet und die Schwerpunkte der von der Oberfläche reflektierten Lichtbündel mit Hilfe von einem oder mehreren positionsempfindlichen optoelektronischen Sensoren vermessen, wobei lokale Neigungswinkelabweichungen der Reflexe zweier Beleuchtungsstrahlen, die in einem voneinander in Betrag und/oder Vorzeichen unterschiedlichen Winkel und schräg zur Oberflächennormalen der zu vermessenden Freiformfläche eingestrahlt werden, registriert und einem mathematischen Auswertealgorithmus unterworfen werden in dessen Ergebnis durch Integration der gemessenen lokalen Neigungswinkelabweichungen das zu bestimmende Oberflächenprofil ermittelt wird. Dem mathematischen Auswertealgorithmus wird dabei ein sich aus den vermessenen Neigungswinkelwertabweichungen der zwei unterschiedlich reflektierten Beleuchtungsstrahlen generierbares Facettenmodell zur Nachbildung des realen Freiformflächenoberflächenprofils zugrunde gelegt, bei welchem durch sukzessive Annäherung theoretisch bestimmter Neigungswinkelabweichungen und ein- bis mehrfachem Vergleich mit den real gemessenen Neigungswinkelabweichungen eine Annäherung und Nachkorrektur des Facettenmodells solange vorgenommen wird, bis eine Identität oder zugelassene Toleranz der theoretischen und realen Messwerte vorliegt.

Das erfindungsgemäße Verfahren ist dabei im Detail durch nachstehende Schritte dadurch gekennzeichnet, dass

a) eine der zu vermessen Freiformfläche ($F_r$) im Makroprofil angepasste Tastbahn ($F_0$) vorgegeben wird,

b) entlang der Tastbahn ($F_0$) in vorgebbaren Tastschritten jeder Punkt der zu vermessenden Oberfläche ($F_r$) mit zwei Beleuchtungsstrahlen unterschiedlichen Einstrahlwinkels gleichzeitig oder nacheinander abgetastet wird,

c) die jeweiligen Auslenkungen der vom ersten und zweiten Beleuchtungsstrahl von der Oberfläche ($F_r$) reflektierten Strahlen gleichzeitig oder nacheinander jeweils mit Bezug zum jeweils identisch zugehörigen Punkt der Tastbahn ($F_0$) zugeordnet und in einer elektronischen Speichereinheit abgespeichert werden,

d) dort rechnerisch aus den zu einem Abtastpunkt der Führungsbahn ($F_0$) im Vergleich zur realen Oberfläche ($F_r$) sich ergebenden zwei realen Strahlenauftreffpunkte Facetten gebildet werden, deren Neigung bestimmt wird,

e) die Neigungen der so gewonnenen Facetten rechnerisch nacheinander in Bezug zu den Tastbahnpunkten der Tastbahn ($F_0$) aufintegriert werden, woraus ein theoretischer Profilverlauf der Freiformfläche gebildet wird,

f) anschließend im Rahmen einer Vorwärtssimulation der theoretische Profilverlauf mit den beiden nach b) identischen Einstrahlwinkeln simuliert beleuchtet wird und die jeweiligen zugehörigen theoretischen Auslenkungen der reflektierten Strahlen auf der(den) Empfängereinheit(en) berechnet werden,

g) anschließend ein Vergleich der nach f) und c) ermittelten Auslenkungen vorgenommen wird, wobei bei Identität der Datensätze, respektive bei Unterschreiten eines beliebig vorgebbaren Gütemaßes, der nach e) gewonnene theoretische Profilverlauf dem zu ermittelnden Profilverlauf der realen Oberfläche ($F_r$) entspricht, jedoch bei Nichtvorliegen der geforderten Identität,

h) beginnend mit dem Einfallswinkel des ersten Beleuchtungsstrahls, Punkt für Punkt der Tastbahn ($F_0$) folgend, aus dem nach e) gebildeten theoretischen Profilverlauf die jeweiligen Auslenkungen berechnet werden, wobei bei Abweichung dieser berechneten Strahlauslenkung in Bezug auf die nach c) tatsächlich gemessene Strahlauslenkung die zugehörige theoretische Profilneigung in diesem Punkt nachkorrigiert wird und

i) eine identische Nachkorrektur gemäß h) ebenfalls für den zweiten Beleuchtungsstrahl durchgeführt wird,

j) anschließend aus den nach h) und i) gewonnenen theoretischen Kurven, dem Tastpunktraster folgend, aus diesen beiden Werten, die die zugehörigen Neigungen der jeweiligen Oberflächenelemente repräsentieren, jeweils das Mittel der Neigungen gebildet wird und durch Aufintegration dieser Werte erneut ein theoretisches Oberflächenprofil gebildet wird, wobei mit diesem gewonnenen theoretischen Oberflächenprofil die Prozedur, beginnend bei Schritt e), erneut solange durchlaufen wird, bis das reale Oberflächenprofil gemäß g) vorliegt.

Die erfindungsgemäß vorgeschlagene Lösung erlaubt es zudem, Abweichungen der Prüflingsoberfläche von einer vorgegebenen Tastbahn automatisch zu erfassen, wobei erfindungsgemäß das Profil der Prüflingsoberfläche mit Hilfe eines Facettenmodells durch Integration der lokalen Facettenneigungswinkel generiert wird und die gemessenen Bahnabweichungen als lokale Korrekturgrößen zur verbesserten Anpassung bei der Profilformberechnung einbezogen werden bzw. als Stellgröße im Messablauf zur Bahnkorrektur verwandt werden kann.

Das der Vorrichtung zugrunde liegende vektorielle Reflexionsgesetz ist wie folgt gegeben:

$$\vec{e}_r = \vec{e}_i - 2(\vec{n}_n \vec{e}_i)\vec{n}_n, \qquad (1)$$

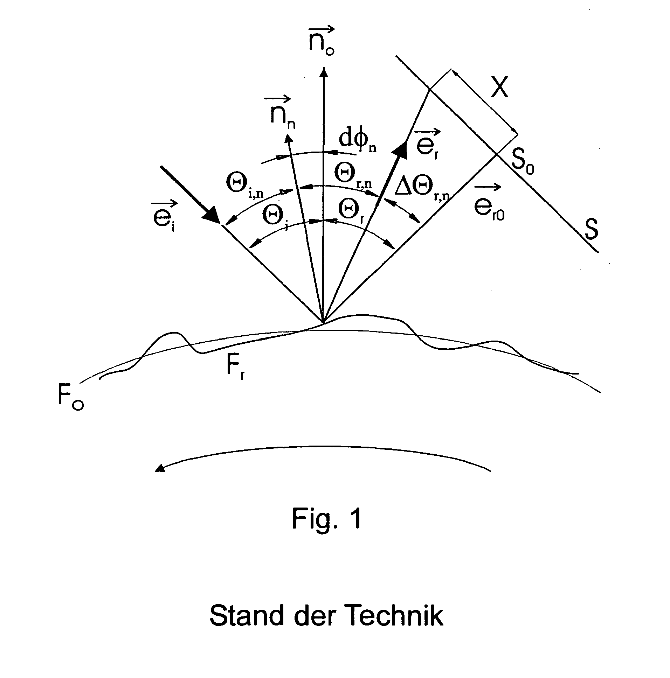

wobei $\vec{e}_r$ der Richtungsvektor des reflektierten Lichtbündels, $\vec{e}_i$ der Richtungsvektor des einfallenden Messlichtbündels und $\vec{n}_n$ die lokal beleuchtete Oberflächennormale des Prüflings sind. Die herkömmliche Messaufgabe der Winkelmessung besteht darin, die Ausrichtung des Normalenvektors $\vec{n}_n$ anhand der Auslenkung des reflektierten Lichtbündels $\vec{e}_r$ zu bestimmen. Für die Profilmessung im eindimensionalen Fall wird die Ausrichtung des reflektierten Lichtbündels $\vec{e}_r$ durch den Reflexionswinkel $\Theta_r$ beschrieben, der sich als Wegdifferenz X auf einer positionsempfindlichen Fläche S erfassen lässt, bei bekanntem Abstand $R_0$ zwischen idealer Tastbahn $F_0$ und Detektionsebene S (vgl. Fig. 1). Dabei wird die Winkeldifferenz $\Delta\Theta_{r,n} = (|\Theta_i|+|\Theta_r|)-(|\Theta_{i,n}|+|\Theta_{r,n}|)$ zwischen idealem Reflexionsvektor $\vec{e}_{r,0}$ (der Oberflächengradient $\vec{n}_0$ steht senkrecht zur Tastbahn) und lokalem Reflexionsvektor $\vec{e}_r$ vermessen. Nach dem eindimensionalen Reflexionsgesetz

$$\Theta_{r,n} = \Theta_i + 2(d\phi_n - \Theta_i), \qquad (2)$$

lassen sich somit die lokalen Oberflächenneigungswinkel $d\phi_n$ berechnen.

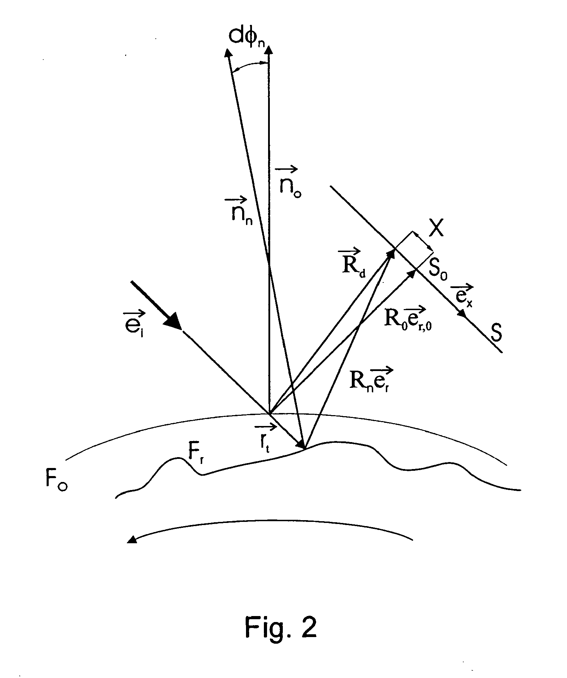

Höhenabweichungen der realen Oberfläche $F_r$ zu Tastbahn $F_0$ können damit nicht erfasst werden. Bei der Vermessung von Freiformflächen lässt sich die Tastbahn oftmals nur bedingt der makrogeometrischen Form des Prüflings anpassen, so dass Abweichungen der Oberfläche von der Tastbahn als Messgrößen berücksichtigt werden müssen. Die Auslenkung des reflektierten Strahls X auf der Empfängerfläche S resultiert nun aus der Summe des lokalen Richtungsvektors des reflektierten Lichtbündels $\vec{e}_r$ und dem Ortsvektor der Bahnabweichung $\vec{r}_t$ (vgl. Fig. 2). Der Vektor $\vec{R}_d$, der die Strecke zwischen idealem Auftreffpunkt auf der Tastbahn und dem Auftreffpunkt des reflektierten Lichtbündels auf dem Detektor definiert, ergibt sich aus

$$\vec{R}_d = \vec{r}_t + R_n \vec{e}_r, \qquad (3)$$

wobei $R_n$ der Abstand zwischen dem realen Oberflächenauftreffpunkt und dem Auftreffpunkt auf dem Detektor ist. Dieser Abstand berechnet sich wie folgt

$$R_n = \frac{R_0 - \vec{r}_t \vec{e}_{r,0}}{(\vec{e}_{r,0}\vec{e}_r)} = \frac{R_0 - r_t(\vec{e}_i\vec{e}_{r,0})}{(\vec{e}_{r,0}\vec{e}_r)}. \qquad (4)$$

Um die Auslenkung X des reflektierten Lichtbündels auf der Detektorfläche S zu berechnen, bildet man das Skalarprodukt

$$X = \vec{R}_d\vec{e}_x = r_t(\vec{e}_i\vec{e}_x) + \frac{R_0 - r_t(\vec{e}_i\vec{e}_{r,0})}{(\vec{e}_{r,0}\vec{e}_r)}(\vec{e}_r\vec{e}_x). \qquad (5)$$

Durch lösen der Skalarprodukte in Gl. (5) erhält man

$$X = r_t \sin(2\Theta_i) + \frac{R_0 + r_t \cos(2\Theta_i)}{\cos(2d\phi_n)} \sin(2d\phi_n). \qquad (6)$$

Man erkennt an Gleichung (6), dass die Auslenkung X auf dem Detektor sowohl von dem lokalen Neigungswinkel $d\phi_n$ der Oberfläche als auch vom Abstand $r_t$ der Tastbahn abhängt und sich somit bei fester Einstellung von $\vec{e}_i$ aus einem Tastpunkt nicht beide Größen bestimmen lassen.

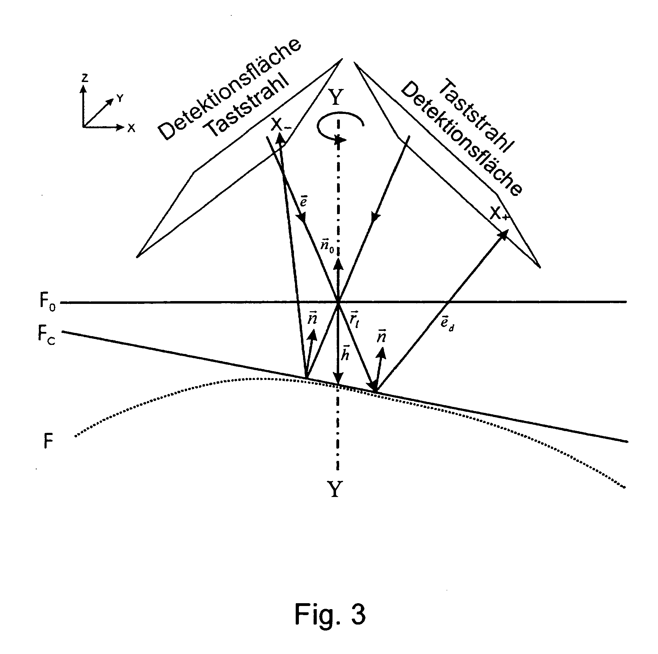

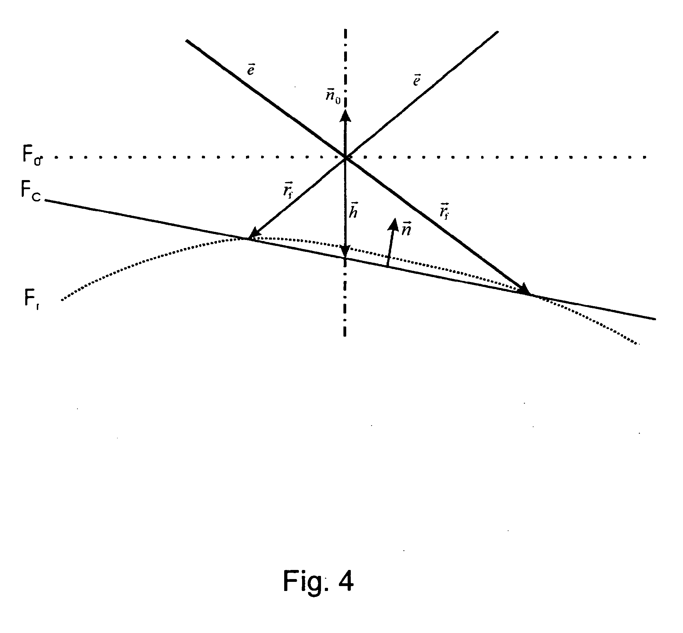

Um beide Größen ermitteln zu können, wird erfindungsgemäß ein zweites Messlichtbündel hinzugezogen. Figur 3 zeigt ein mögliches Beispiel zur Informationserweiterung einer Winkelmessung an einer Freiformfläche durch Vertauschung von Beleuchtungs- und Beobachtungsrichtung. Das Profil wird nun aus zwei Richtungen beleuchtet und liefert jeweils ein Messsignal, das je nach Beleuchtungsrichtung mit X+ und X- bezeichnet ist. Da die Richtungsumkehr sich auf die hier als eben vorgegebene Tastbahn $F_0$ bezieht (die Rotationsachse Y-Y entspricht der idealen Oberflächennormale $\vec{n}_0$), liegen je nach Einfallswinkel und Tastbahnverschiebung h die beleuchteten Auftreffpunkte an unterschiedlichen Positionen des zu untersuchenden Oberflächenprofils. Setzt man ein stetig verlaufendes Oberflächenprofil voraus, kann das Oberflächenprofil durch eine Sekante $F_c$ zwischen den beiden beleuchteten Oberflächenpunkten angenähert werden (vgl. Fig. 4). Diese somit gebildete Oberflächenfacette beschreibt das Profil für eine definierte Tastbahnposition durch eine mittlere Facettennormale $\vec{n}$ und einem lotrechten Tastbahnabstand h. Unter Verwendung von Gleichung (6) und der Bestimmung von $r_t$ der theoretisch beleuchteten Facette $F_c$ durch den lotrechten Abstand h nach der Gleichung

$$r_t = h \frac{(\vec{n}\vec{n}_0)}{-(\vec{e}_i\vec{n})} = -h \frac{\cos(d\phi_n)}{\cos(\Theta_i + d\phi_n)} \qquad (7)$$

ergeben sich für die Detektorauslenkungen X+ und X- folgende Gleichungen

$$X+ = -h \frac{\cos(d\phi_n)\sin(2\Theta_{i,1})}{\cos(d\phi_n + \Theta_{i,1})} + \left( R_0 - h \frac{\cos(d\phi_n)\cos(2\Theta_{i,1})}{\cos(d\phi_n + \Theta_{i,1})} \right) \tan(2d\phi_n)$$
$$X- = -h \frac{\cos(d\phi_n)\sin(2\Theta_{i,2})}{\cos(d\phi_n + \Theta_{i,2})} + \left( R_0 - h \frac{\cos(d\phi_n)\cos(2\Theta_{i,2})}{\cos(d\phi_n + \Theta_{i,2})} \right) \tan(2d\phi_n)$$
$$\qquad (8)$$

Für den einfachen Fall des Richtungstauschs zwischen Beleuchtungsund Detektionsrichtung, bei dem gilt

$$\Theta_{i,2} = -\Theta_{i,1} = \Theta_i. \qquad (9)$$

können mit Hilfe von Summen- und Differenzbildung aus X+ und X-folgende Gleichungen aufgestellt werden:

$$a = X^+ + X^-$$

$$= \frac{-4h\cos d\phi_n}{\cos(2d\phi_n) + \cos(2\Theta_i)} *$$

$$\left(\sin(2\Theta_i)\cos d\phi_n \cos\Theta_i + \cos(2\Theta_i)\sin d\phi_n \sin\Theta_i\right)\tan(2d\phi_n)$$

$$A = X^+ - X^-$$

$$= 2R_0 \tan(2d\phi_n) -$$

$$\frac{-4h\cos d\phi_n}{\cos(2d\phi_n) + \cos(2\Theta_i)}\left(\sin(2\Theta_i)\sin d\phi_n \sin\Theta_i + \cos(2\Theta_i)\cos d\phi_n \cos\Theta_i\right)\tan(2d\phi_n). \tag{10}$$

Durch Einführung von Hilfsvariablen

$$a_r \equiv \frac{a}{2R_0},$$

$$A_r \equiv \frac{A}{2R_0}, \tag{11}$$

$$H \equiv \frac{-4h\cos d\phi_n}{2R_0(\cos(2\Theta_i) + \cos(2d\phi_n))}$$

lassen sich nach (10) folgende Gleichungen aufstellen, die jeweils die Abhängigkeiten von h und $d\phi_n$ am besten entkoppelt aufzeigen

$$H = \frac{a_r}{\cos(\Theta_i)\cos(d\phi_n)\sin(2\Theta_i) + \sin(\Theta_i)\sin(d\phi_n)\sin(2\Theta_i)\tan(2d\phi_n)},$$

$$\tan(2d\phi_n) = \frac{A_r - H\sin(\Theta_i)\sin(d\phi_n)\sin(2\Theta_i)}{1 + H\cos(\Theta_i)\cos(d\phi_n)\cos(2\Theta_i)} \tag{12}$$

Das nichtlineare Gleichungssystem in Gl. (12) ist mit einem numerischen Verfahren in wenigen Schritten iterativ lösbar, da die zweite transzendente Gleichung in (12) vom Typ x = f(x) für $\tan(2d\phi_n)$ ist. Für diesen Gleichungstyp ist bekannt, dass bei Start mit einem $x_0$-Wert die Folge

$$x_1 = f(x_0)$$
$$x_2 = f(x_1)$$
$$\downarrow$$
$$x_{n+1} = f(x_n) \tag{13}$$

gegen die nächste Nullstelle konvergiert, falls $|f'(x)| < 1$ gilt. Diese Bedingung ist mit dem Gleichungssystem (12) erfüllt. So erhält man aus der zweiten Gleichung von (12) bei einem Startwert H=0 nach wenigen Iterationsschritten den Neigungswinkel $d\phi_n$ und anhand der Hilfsvariablen H aus Gl.(11) nach Umstellen den Tastbahnabstand h für einen gegebenen Tastbahnpunkt x. Durch Abtastung des Oberflächenprofils $F_r$ entlang einer vorgegebenen Tastbahn $F_0$ lassen sich die lokalen Profilneigungen $d\phi_n(x)$ und die lokalen Tastbahnabweichungen h(x) für einen zu vermessenden Profilabschnitt nach dem oben beschriebenen Facettenmodell berechnen. Um ein Profil $z_n(x)$ aus den Neigungswinkeln $d\phi_n(x)$ zu ermitteln, werden die diskreten Neigungswerte wie folgt aufsummiert:

$$z_n = \sum_{j=1}^{n} \tan(d\varphi_j) \cdot dx, \qquad\qquad (14)$$

wobei dx die feste Wegschrittweite der Tastbahn $F_0$ ist. Wird das berechnete Oberflächenprofil $z_n(x)$ unter den gleichen Beleuchtungsrichtungen wie bei der Messung mit Hilfe einer Vorwärtssimulation abgetastet, lassen sich für jeden Tastpunkt die Detektorauslenkungen $X^{\pm}_{theor.}$ ermitteln. Durch eine Ausgleichsrechnung kann dann ermittelt werden, mit welcher Genauigkeit das berechnete Facettenprofil das reale Oberflächenprofil nähert:

$$\chi^2 = \frac{\sum \left( X^{\pm}_{exp} - X^{\pm}_{theo} \right)^2}{\sum \left[ \left( X^{\pm}_{exp} \right)^2 + \left( X^{\pm}_{theo} \right)^2 \right]}, \qquad\qquad (15)$$

wobei $X^{\pm}_{exp.}$ die tatsächlich gemessenen Detektorauslenkungen sind. Anhand von vorgegebenen Werten für die kleinste zu erfassende Profilneigung $\Delta\phi_{min}$ sowie für die Standardabweichung der Profilneigung $\phi_{stand}$ können nach Gleichung (8) eine kleinste mittlere Detektorauslenkung $X^{\pm}(\Delta\phi_{min})$ und eine mittlere Standardabweichung $X^{\pm}(\phi_{stand})$ berechnet werden. Aus diesen Werten lässt sich nach Gleichung (15) der Schwellwert für $\chi^2$ bezogen auf die Güte der Oberflächenprofilnäherung ableiten:

$$\chi^2_{schwell} = \frac{X^{\pm}\left( \Delta\varphi_{min} \right)^2}{X^{\pm}\left( \varphi_{stand} \right)^2}. \qquad\qquad (16)$$

Wird der Schwellwert durch die Facettenmodellnäherung überschritten, so kann zur verbesserten Profilbestimmung ein Iterationsalgorithmus nachfolgen. Für beide Beleuchtungsrichtungen werden jeweils die Auftreffpunkte des Facettenprofils berechnet und die lokalen Neigungen der Auftreffpunkte so nachkorrigiert, dass die theoretischen und experimentellen Detektorauslenkungen gleich sind. Mit den so nachkorrigierten Steigungswerten erhält man zwei Steigungsprofile durch die getrennte Bewertung der Beleuchtungsrichtungen. Nach einer Interpolation der Steigungsprofile mit einem äquidistanten Abtastraster wird das mittlere Steigungsprofil durch Mittelung über die beiden Kurven generiert. Nach Gleichung (14) kann nun ein mittleres nachkorrigiertes Profil berechnet werden. Zur Überprüfung der Profilgüte werden erneut die theoretischen Detektorauslenkungen $X^{\pm}_{theor.}$ berechnet und das Gütekriterium nach Gleichung (15) überprüft. Dieses Verfahren wird solange wiederholt, bis der $\chi^2$- Wert den vorgegebenen Schwellwert unterschreitet. Zumeist ist diese Iteration in wenigen Durchläufen erfolgreich. Das für gleiche Einfallswinkel mit unterschiedlichen Vorzeichen beschriebene Verfahren ist für eine Vielzahl von Einfallswinkelkombinationen $[\Theta_{i,1}, \Theta_{i,2}]$ anwendbar. Es können die Einfallswinkel unterschiedliche Winkelwerte bei gleichem oder entgegengesetzten Vorzeichen besitzen. Ebenfalls lassen sich bei unterschiedlichem Vorzeichen der Einfallswinkel Beleuchtungs- und Beobachtungsrichtungen außerhalb der Profilebene realisieren. In allen Fällen nimmt das nichtlineare Gleichungssystem nach Gl.(12) eine komplexere Form an, die gezeigten Abhängigkeiten bleiben jedoch bestehen.

Die Erfindung soll nachstehend anhand von Ausführungsbeispielen und schematischer Zeichnungen näher erläutert werden. Es zeigen:

Fig. 1    schematisch eine Differenzwinkelmessung nach dem Stand der Technik;

Fig. 2    schematisch die tatsächlichen Verhältnisse einer Differenzwinkelmessung an einer Freiformfläche;

Fig. 3    schematisch eine zweiachsigen Differenzwinkelmessung durch Umkehr von Beleuchtungs- und Detektionsrichtung;

Fig. 4    zur Erläuterung ein Facettenmodell zur Näherung eines Profils bei einer zweiachsigen Differenzwinkelmessung;

Fig. 5    schematische eine Darstellung einer ersten Möglichkeit einer Ausführungsform einer erfindungsgemäßen Vorrichtung;

Fig. 6    den möglichen Akzeptanzbereich (Arbeitsbereich) einer typischen drehbaren Sensoreinheit zur Asphärenprüfung, geschaffen mit einer vorrichtungsmäßigen Ausführungsform nach Fig. 5;

Fig. 7    schematische eine Darstellung einer zweiten Möglichkeit einer Ausführungsform einer erfindungsgemäßen Vorrichtung mit fester Anordnung der einzelnen Komponenten;

Fig. 8    eine detaillierte Darstellung einer Vorrichtung nach Fig. 7 im seitlichen Schnitt;

Fig. 9    den möglichen Akzeptanzbereich (Arbeitsbereich) einer vorrichtungsmäßigen Ausführungsform nach Fig. 7, respektive 8;

Fig. 10   ein Beispiel für praktisch erhaltene Detektorauslenkungen;

Fig. 11   beispielhaft ein Profil einer vermessenen Oberfläche in Gegenüberstellung zu den erhaltenen Werten mittels einer Tastschnittvermessung.

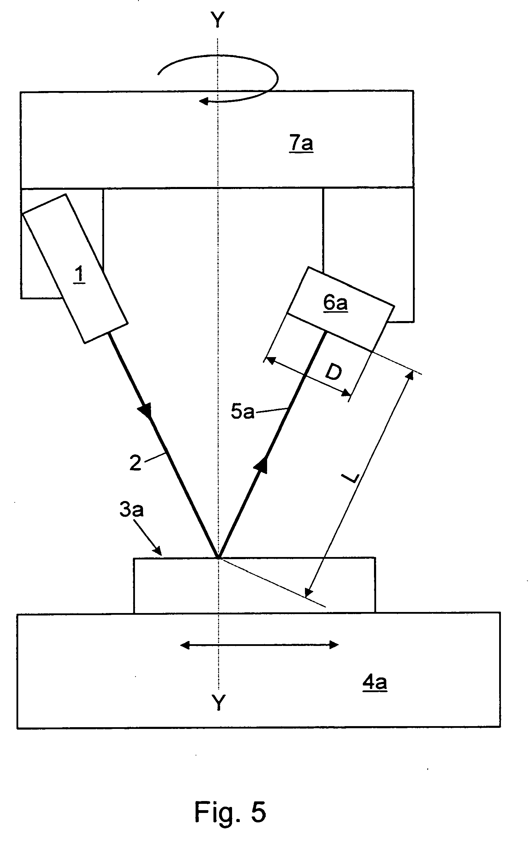

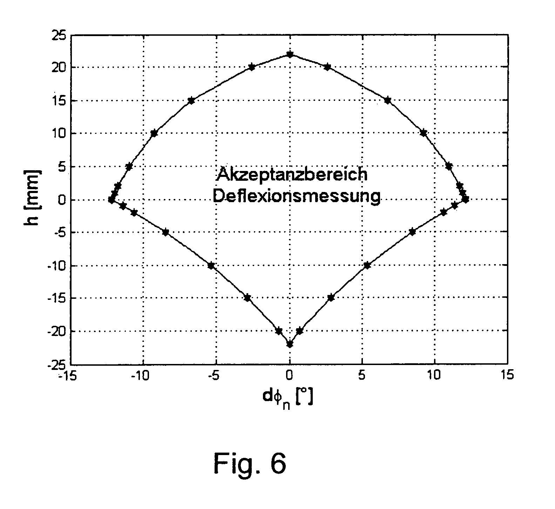

Der prinzipielle Aufbau der erfindungsgemäßen Messvorrichtung und zugleich eine erste mögliche Ausführungsvariante einer Vorrichtung ist in Fig. 5 dargestellt. Eine Laserdiode 1 emittiert ein Lichtbündel 2, das die Prüflingsoberfläche 3a unter einem definierten Einfallswinkel beleuchtet. Das an der Prüflingsoberfläche reflektierte Lichtbündel 5a wird mit Hilfe eines positionsempfindlichen Empfängers 6a aufgenommen. Die gesamte Sensoreinheit (Laser 1 und Empfänger 6a) ist in diesem Beispiel auf einem Rotationstisch 7a befestigt, so dass der Beleuchtungspunkt der Oberfläche auf der Rotationsachse Y-Y des Rotationstischs 7a liegt. Durch Drehen des Rotationstischs 7a um 180° ist die Beleuchtungsrichtung und die Beobachtungsrichtung tauschbar (vgl. dazu Fig. 3), wobei die im Rahmen des erfindungsgemäßen Verfahrens erforderlichen zwei unterschiedlichen Einstrahlwinkel realisierbar sind. Der Prüfling mit seiner Oberfläche 3a ist auf einem Translationstisch 4a befestigt, der in definiert vorgebbaren Schrittweiten, entlang eines in Fig. 5 dargestellten Doppelpfeils, ein Abscannen der Prüflingsoberfläche 3a ermöglicht. Durch Variation des Empfängerabstands L und/oder durch die Wahl der sensitiven Empfängerausdehnung D können unterschiedliche Empfindlichkeiten des Messsystems bzw. unterschiedliche Winkelmessbereiche eingestellt werden. Sind hochgenaue Ebenheitsmessungen durchzuführen, wird der Empfängerabstand L groß gewählt, um kleinste Winkeländerungen im Bogensekundenbereich mit dem Messsystem auflösen zu können. Ebenfalls bei zylindrischen Prüflingen, bei denen Formabweichungen von wenigen Nanometern aufzulösen sind und die Exzentrizität der Prüffläche klein ist, lassen sich erfindungsgemäße Messsysteme mit großem Empfängerabstand L einsetzen. Weisen jedoch die Prüflinge große Abweichungen des Oberflächenprofils zur Tastbahn auf, sind Messsysteme mit kleinem Empfängerabstand L und großer Empfängerausdehnung D zu wählen. So können bspw. Asphären oder andere stetige Freiformflächen bis zu $\pm 20°$ Neigungswinkelabweichung zur Tastbahn aufweisen und sind dennoch mit Hilfe der erfindungsgemäßen Lösung vermessbar. Für eine typische Empfängeranordnung mit drehbarer Beleuchtungs- und Empfängereinheit ist der Akzeptanzbereich (Arbeitsbereich) in Figur 6 dargestellt. Man sieht dort, dass bei einem angenommenen Einfallswinkel von 20°, einer Empfängerentfernung L = 33mm und einer sensitiven Empfängerausdehnung D = 30 mm Neigungswinkelabweichungen zur Tastbahn von maximal $\pm 12°$ detektierbar sind und Tastbahnabstände von maximal $\pm 22$mm. Mit diesen Parametern lassen sich Asphären über einem großen Krümmungsbereich hochauflösend auf Formabweichung prüfen. Bei der Messwertaufnahme werden zunächst die lokalen Neigungswinkel $d\phi_n$ für eine feste Beleuchtungsrichtung aufgenommen. Anschließend wird das Messsystem um 180° azimutal gedreht und das Profil bei entgegengesetzter Beleuchtung erneut in gleicher Tastschrittweite vermessen. Die Auswertung der Messdaten erfolgt nach dem beschriebenen erfindungsgemäßen Verfahren.

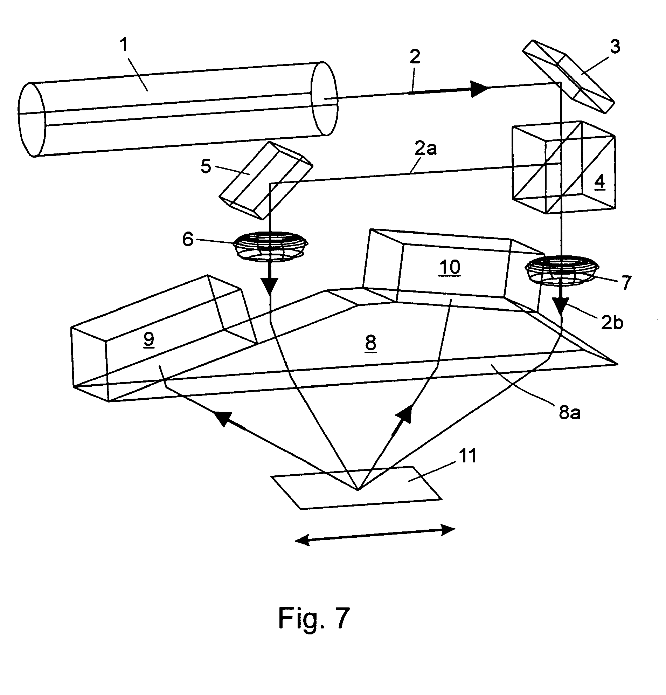

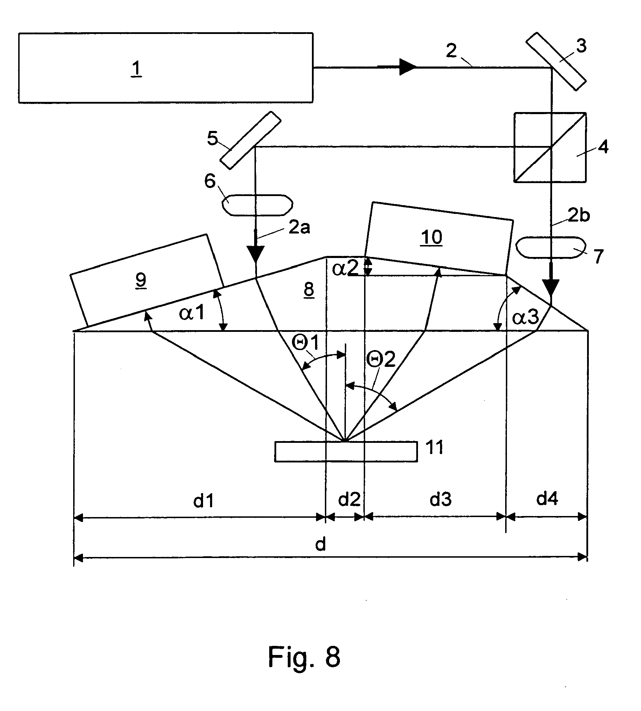

Um die technisch mögliche, aber nur mit hohem Aufwand zu realisierende, vorstehend beschriebene hochgenaue Drehung des Sensorsystems zu vermeiden, wurde eine zweite Ausführungsform der erfindungsgemäßen Vorrichtung entwickelt, welche anhand der Figuren 7 und 8 näher beschrieben werden soll. Die Figuren 7 und 8 zeigen eine Laserdiode 1, die ein Lichtbündel 2 emittiert, das mit Hilfe eines Spiegels 3 umgelenkt wird. Ein Strahlteilerwürfel 4 spaltet das Lichtbündel 2 in die zwei Teillichtbündel 2a und 2b gleicher Intensität auf. Ein Spiegel 5 lenkt das Lichtbündel 2a so um, dass dieses parallel zum Strahl 2b verläuft und beide Lichtbündel senkrecht zur Hauptfläche 8a eines Prismas 8 ausgerichtet sind. Linsen 6 und 7 fokussieren die Teillichtbündel auf die Prüflingsoberfläche 11. Die Fokussieroptiken sind für die Vermessung rauer Oberflächen günstigerweise Zylinderlinsen, da infolge der Linienbeleuchtung bei kleinen Linienbreiten in Abtastrichtung über die Specklestruktur der reflektierten Lichtbündel mit Hilfe der Empfängerflächen der positionsempfindlichen optoelektronischen Empfänger 9 und 10 gemittelt werden kann. Dieses führt zu einer verbesserten Schwerpunktbestimmung der reflektierten Lichtbündel bei kohärentem Rauschen und ermöglicht somit die Differenzwinkelmessung an rauen Prüflingsoberflächen. Zentrales optisches Bauteil im Strahlengang ist das erfindungsgemäß ausgebildete Prisma 8, das die einfallenden Lichtbündel 2a und 2b durch die präzise gefertigten Prismenwinkel $\alpha 1$, $\alpha 3$ nach dem Brechungsgesetz umlenkt und mit definierten Einfallswinkeln so auf die Prüflingsoberfläche 11 richtet, dass sich die Lichtbündel im Fokuspunkt schneiden. Dieser Schnittpunkt definiert zugleich die Lage der idealen Tastbahn $F_0$, deren Abstand zum Prisma durch den Schnittpunkt der Lichtbündel gegeben ist und parallel zur Prismenhauptfläche 8a ausgerichtet ist. Die Einfallswinkel der Lichtbündel 2a und 2b auf die Prüflingsoberfläche 11 sind so gewählt, das die an der Oberfläche 11 reflektierten Lichtbündel mit Hilfe einer erneuten Ablenkung durch das Prisma 8 auf die positionsempfindlichen optoelektronischen Detektoren 9 und 10 fallen und bei idealer Ausrichtung der Prüflingsoberfläche 11 die sensitiven Detektorflächen in der Nullposition beleuchten. Die Prismenflächen, die bevorzugt zugleich als Anlagefläche für die Detektoren 9 und 10 dienen, besitzen vorzugsweise solche Winkel, das die Detektoren in der Nullposition der Messkopfanordnung durch die reflektierten Lichtbündel senkrecht beleuchtet werden. Dadurch wird eine nahezu lineare Abhängigkeit der Auslenkung X auf der Detektorfläche vom Neigungswinkel der lokal beleuchteten Oberflächenfacette realisiert. Infolge dieser Winkelumlenkung durch das Prisma 8 kann eine kompakte Bauweise des Sensorkopfs erreicht werden, bei gleichzeitig hinreichend großem Messbereich des zu bestimmenden Differenzwinkels. Der Justiervorgang der Optik vereinfacht sich gegenüber der vorstehend beschriebenen Ausführungsform, da das Prisma 8 als Winkelbezugssystem dienen kann. Die Prismenflächen, die präzise Prismenwinkel einschließen, sind Bezugsflächen für die optoelektronischen Empfänger 9 und 10 und die Beleuchtungsoptik mit Laserdiode 1, Spiegel 3 und 5, Strahlteiler 4 und Fokuslinsen 6 und 7. Für die Empfänger 9 und 10 dienen die Prismenflächen als direkte Anlageflächen. Bei der Beleuchtungsoptik können die direkten Reflexe an den ersten brechenden Prismenflächen im einfallenden Strahlengang zur Justage und genauen Ausrichtung der optischen Achse des Beleuchtungssystems genutzt werden. Somit ergeben sich präzise Einstellungsmöglichkeiten der Winkel für die einfallenden und reflektierten Lichtbündel, die über das Prisma einem festen Bezugssystem zugeordnet sind. Unter Ausnutzung der Totalreflexion an der Auflagefläche zwischen Prisma 8 und Empfänger 9 und 10 sind die jeweiligen Sehwinkel der Empfänger eingrenzbar, was zu einer zusätzlichen Unterdrückung von Störlicht aus der Umgebung genutzt werden kann.

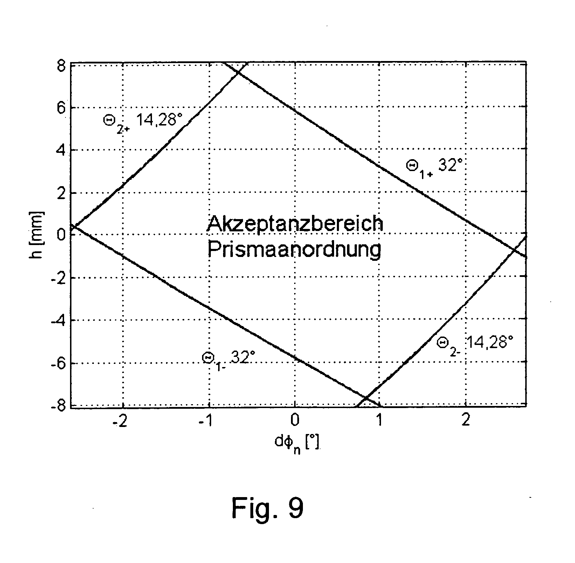

Jede Zweistrahlmessvorrichtung, geschaffen nach vorliegender Erfindung, weist einen für sie typischen Akzeptanzbereich, innerhalb dessen eine Messung durchgeführt werden kann, auf. Vorgegeben durch die Einfallswinkel der Messlichtbündel, dem Arbeitsabstand zwischen Prüflingsoberfläche und der Prismengrundfläche sowie der Ausdehnung der positionsempfindlichen Empfänger entsteht in der Messparameterebene [h,d$\phi_n$] ein geschlossener Wertebereich, innerhalb dessen nur Messungen möglich sind. Für vorstehend beschriebene Vorrichtung nach den Figuren 7 und 8 ist genannter Akzeptanzbereich in Fig. 9 dargestellt. Für eine beliebige Tastbahn kann der Deflexionsmesskopf innerhalb dieses Wertebereichs Messdaten aufnehmen. Somit ist es notwendig, für eine gegebene Messaufgabe den Akzeptanzbereich des Messkopfs so zu wählen, dass eine einfache Tastbahn (Lineartastung oder Kreisbahntastung) die zu vermessende Makrogeometrie der Oberfläche so nähert, das die lokalen Neigungswinkel der Oberfläche sowie die Tastbahnabstände der Oberfläche innerhalb des Akzeptanzbereichs des Messkopfs liegen. Bei der Messwertaufnahme kann die Prüflingsoberfläche 11 lateral mit einer definierten Schrittweite verschoben werden oder bei stark gekrümmten Oberflächen in einer die Oberflächenkrümmung approximierenden Kreisbahn mit einer bekannten Winkelschrittweite um die Rotationsachse gedreht werden, die in der Nähe des Kreisbahnmittelpunktes des Prüflings 11 liegen sollte und senkrecht zur Tastrichtung ausgerichtet sei. Für jeden abgetasteten Bahnpunkt der Prüflingsoberfläche erfolgt die Auslesung der optoelektronischen Empfänger 9 und 10 und Abspeicherung der Auslenkwinkel durch einen PC oder ein äquivalentes Speichersystem. Die erfindungsgemäße Berechnung der lokalen Neigungswinkel und des Tastbahnabstandes kann unmittelbar nach der Messwertaufnahme für eine eingestellte Bahnposition erfolgen, wobei der berechnete Tastbahnabstand bei Überschreitung eines vorgegebenen Grenzbereichs zur aktiven Bahnkorrektur des Empfängers bzw. des Prüflings genutzt werden kann.

Die erfindungsgemäße Lösung wird im folgenden anhand des Ausführungsbeispiels nach Fig. 7 und 8 beschrieben. Als Beispiel soll eine ebene polierte Glasoberfläche auf Formabweichung und Politurriefen untersucht werden. Der Glasprüfling wird auf einem xy-Tisch gehaltert, der in Schrittweiten von 1$\mu$m sowohl in x- wie in y-Richtung verfahren werden kann. Die Prüflingsoberfläche wird zur xy-Tastebene parallel ausgerichtet. Durch Verfahren des Tischs (in Fig.7 und 8 nicht dargestellt) in x-Richtung wird ein Profilschnitt des Prüflings mit Hilfe eines erfindungsgemäßen Messkopfs nach Fig. 8 erfasst. Dabei erfolgt die Messwertaufnahme in Abhängigkeit von der Tischposition durch ein handshaking-Verfahren. Der erfindungsgemäße optische Messkopf besteht in diesem bevorzugten Ausführungeispiel aus einem Pentaprisma, dessen Hauptfläche im Beispiel eine Ausdehnung von d=72,2mm besitzt. Die Prismenwinkel $\alpha$1=16°47' und $\alpha$2=7°44' sind so gewählt, dass bei einem Einfallswinkel von $\Theta$1=-14°17' und $\Theta$2=32° die Empfängerflächen der positionsempfindlichen Fotodioden bei idealer ebener in der Tastebene befindliche Oberfläche durch die reflektierten und gebrochenen Lichtbündel senkrecht beleuchtet werden. Die positionsempfindlichen Fotodioden (PSD) besitzen im Beispiel eine effektive Messlänge von 10mm. Der optimale Arbeitsabstand zwischen Prismenhauptfläche 8a und Prüflingsoberfläche 11 ist mit 44,5mm gegeben. Die Dachflächen des Pentaprismas besitzen zur Hauptfläche d die Ausdehnungen d1=35,5mm, d2=5,4mm, d3=19,8mm und d4=11,5mm. Es ergibt sich somit ein Akzeptanzbereich des Messkopfs, der maximale Profilneigungswinkel d$\phi_n$=$\pm$2.3° und maximale Tastbahnabstände von h=$\pm$6mm zulässt (vgl. Fig.9).

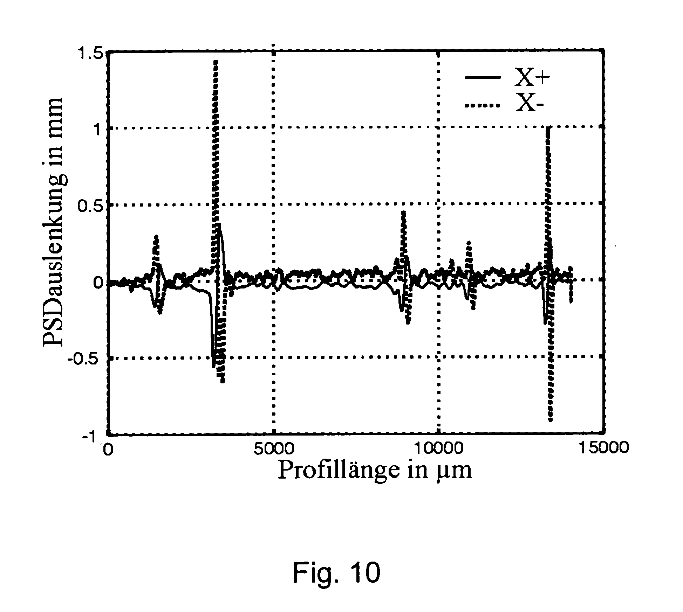

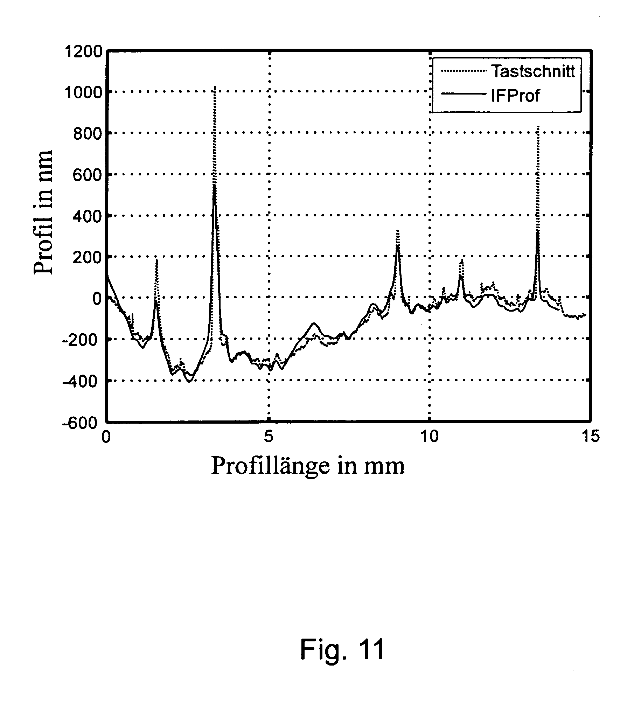

Zu Beginn der Messung wird der Messkopf senkrecht zur Prüflingsoberfläche zugestellt, bis er den optimalen Arbeitspunkt erreicht hat. Diese Position kann durch Erfassung der Signale von den Detektoreinheiten automatisch angefahren werden, da beim optimalen Arbeitsabstand des Messkopfes die an der Prüflingsoberfläche reflektierten Lichtbündel die Detektoren in der jeweiligen Nullposition beleuchten. Ist der optimale Arbeitsabstand des Messkopfs zur Prüflingsoberfläche eingestellt, erfolgt die Messwertaufnahme. Der Translationstisch verfährt mit fester Schrittweite die Prüflingsoberfläche und bei jeder Messortposition erfolgt die Auslesung der Auslenksignale X+ und X- auf den beiden positionsempfindlichen Detektoren 9, 10. Figur 10 zeigt im Beispiel die Auslenksignale für die beiden Richtungen. Mit dem erfindungsgemäßen Verfahren erfolgt anschließend die Berechnung des Profils. Das Ergebnis zeigt Figur 11. Zum Vergleich ist eine Tastschnittmessung des Profils an ähnlicher Position überlagert dargestellt. Trotz der Schwierigkeit, die nicht immer sichere Zuordnung identischer Messorte bei Durchführung von unterschiedlichen Messverfahren zu gewährleisten, was gewisse Abweichungen der beiden verglichenen Profilverläufe zeigen, ist jedoch deutlich die Ähnlichkeit der beiden Profile und sehr genaue Übereinstimmung der Gestaltsabweichungen zu erkennen.

Mit dem erfindungsgemäßen Verfahren und der Vorrichtung ist es möglich, in einem an die jeweilige Messaufgabe anpassungsfähigen Akzeptanzbereich der Messung lokale Profilneigungswerte und Tastbahnabstände zu erfassen. Durch die Vorgabe der Prismenparameter kann man sich gezielt einer Messaufgabe anpassen. Mit Hilfe eines Facettenmodells lässt sich aus den Profilneigungswerten ein Oberflächenprofil berechnen und mit Hilfe der Tastbahnabstände in einem Iterationsalgorithmus dieses Profil nachkorrigieren. Das Verfahren kann für beliebige Tastbahnverläufe eingesetzt werden und ermöglicht somit die Vermessung von Freiformflächen in einem relativ großen Spektrum von reinen Ebenen bis hin zu Asphären.

Der Hauptvorteil vorliegender Erfindung besteht darin, dass, da das Profil durch Integration der gemessenen lokalen Neigungswerte ermittelt wird, das Messverfahren unempfindlich ist gegenüber kleinen ungewollten Tastbahnabweichungen, wie Schwingungen des Messkopfs oder Prüflings oder Lagerrattern bei Prüflingsrotation bzw. -translation. Somit sind Formabweichungen und Welligkeiten der Prüflingsoberfläche im Nanometerbereich messbar, selbst wenn die Störgrößen Tastbahnabweichungen im Mikrometerbereich verursachen. Bei solchen unerwünschten Störgrößen, die beim praktischen Einsatz meist unvermeidbar sind, versagen vergleichbare Verfahren, wie z.B. interferometrische.

Bezugszeichenliste

| | |
|---|---|
| 1 | - Beleuchtungseinrichtung / Laserdiode |
| 2, 2a, 2b | - Beleuchtungsstrahl |
| 3, 5 | - Spiegel |
| 3a, 11 | - Prüflingsoberfläche |
| 4 | - Strahlteilerwürfel |
| 5a | - reflektiertes Lichtbündel |
| 6,7 | - Linsen |
| 6a, 9, 10 | - positionsempfindlicher Empfänger |
| 7a | - Rotationstisch |
| 8 | - Prisma, Pentaprisma |
| $\alpha 1, \alpha 2, \alpha 3$ | - Prismenwinkel |
| $\Theta_{in}, \Theta 1, \Theta 2$ | - Einstrahlwinkel |
| $\underline{\Theta}_m,$ | - Reflexstrahlwinkel |
| $\overline{e}_r$ | - lokaler Reflexionsvektor |
| $d\phi_n$ | - lokale Oberflächenneigungswinkel |
| d | - Ausdehnung der Prismenbasisfläche |
| d1,d2,d3,d4 | - Ausdehnungen der Prismendachflächen |
| D | - sensitive Empfängerfläche |
| $F_0$ | - Tastbahn |
| $F_r$ | - reale Oberfläche |
| $F_c$ | - theoretische Facette |
| h | - Tastbahnabstand |
| $\underline{L}$ | - Empfängerabstand |
| $\overline{n}_0$ | - Oberflächennormale |
| $S_0$ | - Nullpunkt der Detektionsebene |
| S | - Detektionsebene |
| X | - Auslenkung des reflektierten Strahls auf dem Detektor |

**Patentansprüche**

1. Verfahren zur Bestimmung von Formabweichungen und Welligkeiten an stetigen Freiformflächen, **dadurch gekennzeichnet, dass** lokale Neigungswinkelabweichungen von Reflexen zweier Beleuchtungsstrahlen, die in einem voneinander in Betrag und/oder Vorzeichen unterschiedlichen Winkel und schräg zur idealen Oberflächennormalen der zu vermessenden Freiformfläche eingestrahlt werden, registriert und einem mathematischen Auswertealgorithmus derart unterworfen werden, dass ihm ein sich aus den vermessenen Neigungswinkelwertabweichungen der zwei unterschiedlich reflektierten Beleuchtungsstrahlen generierbares Facettenmodell zur Nachbildung des realen Freiformflächenoberflächenprofils zugrunde gelegt wird, bei welchem durch sukzessive Annäherung theoretisch bestimmter Neigungswinkelabweichungen und ein- bis mehrfachem Vergleich mit den real gemessenen Neigungswinkelabweichungen eine Annäherung und Nachkorrektur des Facettenmodells solange vorgenommen wird, bis eine Identität oder zugelassene Toleranz der theoretischen und realen Messwerte vorliegt in dessen Ergebnis durch Integration der gemessenen lokalen Neigungswinkelabweichungen die zu bestimmende Formabweichung und Welligkeit ermittelt werden.

2. Verfahren zur Bestimmung von Formabweichungen und Welligkeiten an stetigen Freiformflächen nach Anspruch 1, **dadurch gekennzeichnet, dass**

a) eine der zu vermessen Freiformfläche ($F_r$) im Makroprofil angepasste Tastbahn ($F_0$) vorgegeben wird,
b) entlang der Tastbahn ($F_0$) in vorgebbaren Tastschritten jeder Punkt der zu vermessenden Oberfläche ($F_r$) mit zwei Beleuchtungsstrahlen unterschiedlichen Einstrahlwinkels gleichzeitig oder nacheinander abgetastet wird,
c) die jeweiligen Auslenkungen der vom ersten und zweiten Beleuchtungsstrahl von der Oberfläche ($F_r$) reflektierten Strahlen gleichzeitig oder nacheinander jeweils mit Bezug zum jeweils identisch zugehörigen Punkt der Tastbahn ($F_0$) zugeordnet und in einer elektronischen Speichereinheit abgespeichert werden,
d) dort rechnerisch aus den zu einem Abtastpunkt der Führungsbahn ($F_0$) im Vergleich zur realen Oberfläche ($F_r$) sich ergebenden zwei realen Strahlenauftreffpunkte Facetten gebildet werden, deren Neigung bestimmt wird,
e) die Neigungen der so gewonnenen Facetten rechnerisch nacheinander in Bezug zu den Tastbahnpunkten der Tastbahn ($F_0$) aufintegriert werden, woraus ein theoretischer Profilverlauf der Freiformfläche gebildet wird,
f) anschließend im Rahmen einer Vorwärtssimulation der theoretische Profilverlauf mit den beiden nach b) identischen Einstrahlwinkeln simuliert beleuchtet wird und die jeweiligen zugehörigen theoretischen Auslenkungen der reflektierten Strahlen auf der(den) Empfängereinheit(en) berechnet werden,
g) anschließend ein Vergleich der nach f) und c) ermittelten Auslenkungen vorgenommen wird, wobei bei Identität der Datensätze, respektive bei Unterschreiten eines beliebig vorgebbaren Gütemaßes, der nach e) gewonnene theoretische Profilverlauf dem zu ermittelnden Profilverlauf der realen Oberfläche ($F_r$) entspricht, jedoch bei Nichtvorliegen der geforderten Identität,
h) beginnend mit dem Einfallswinkel des ersten Beleuchtungsstrahls, Punkt für Punkt der Tastbahn ($F_0$) folgend, aus dem nach e) gebildeten theoretischen Profilverlauf die jeweiligen Auslenkungen berechnet werden, wobei bei Abweichung dieser berechneten Strahlauslenkung in Bezug auf die nach c) tatsächlich gemessene Strahlauslenkung die zugehörige theoretische Profilneigung in diesem Punkt nachkorrigiert wird und
i) eine identische Nachkorrektur gemäß h) ebenfalls für den zweiten Beleuchtungsstrahl durchgeführt wird,
j) anschließend aus den nach h) und i) gewonnenen theoretischen Kurven, dem Tastpunktraster folgend, aus diesen beiden Werten, die die zugehörigen Neigungen der jeweiligen Oberflächenelemente repräsentieren, jeweils das Mittel der Neigungen gebildet wird und durch Aufintegration dieser Werte erneut ein theoretisches Oberflächenprofil gebildet wird, wobei mit diesem gewonnenen theoretischen Oberflächenprofil die Prozedur, beginnend bei Schritt e), erneut solange durchlaufen wird, bis das reale Oberflächenprofil gemäß g) vorliegt.

3. Vorrichtung zur Bestimmung von Formabweichungen und Welligkeiten an stetigen Freiformflächen, **dadurch gekennzeichnet, dass** Translations- und/oder Rotationsmittel (4a) vorgesehen sind zum Aufnehmen und relativ zu einer im Makroprofil an die zu vermessende Freiformfläche ($F_r$) angepassten Tastbahn ($F_0$) in vorgebbaren Tastschritten Vorbeibewegen der Freiformfläche, dass eine Beleuchtungseinrichtung (1) vorhanden ist zum Generieren zweier Beleuchtungsstrahlen (2; 2a, 2b) durch geeignete optische Mittel (7a; 3, 4, 5 und 8) so dass die Beleuchtungsstrahlen in einem voneinander im Betrag und/oder Vorzeichen unterschiedlichen Winkel ($\Theta 1$, $\Theta 2$) schräg zur idealen Oberflächennormalen ($\vec{n}_0$) auf die zu vermessenden Freiformfläche ($F_r$) einstrahlbar sind, und dass geeignete positionsempfindliche Empfänger (6a, 9, 10) vorhanden sind zum Punkt für Punkt der translatorischen und/oder rotierenden Abtastung folgenden getrennten Erfassen und elektronischen Speichern der Neigungswinkel der von der Freiformfläche ($F_r$) reflektierten Strahlen, und dass die Vorrichtung gestaltet ist zum einem mathematischen Auswertealgorithmus Unterwerfen der lokalen Neigungswinkelabweichungen von Reflexen zweier Beleuchtungsstrahlen, die in einem voneinander in Betrag und/oder Vorzeichen unterschiedlichen Winkel und schräg zur Oberflächennormalen der zu vermessenden Freiformfläche eingestrahlt werden, derart dass ihm ein sich aus den vermessenen Neigungswinkelwertabweichungen der zwei unterschiedlich reflektierten Beleuchtungsstrahlen generierbares Facettenmodell zur Nachbildung des realen Freiformflächenoberflächenprofils zugrunde legbar ist, bei welchem durch sukzessive Annäherung theoretisch bestimmter Neigungswinkelabweichungen und ein- bis mehrfachem Vergleich mit den real gemessenen Neigungswinkelabweichungen eine Annäherung und Nachkorrektur des Facettenmodells solange vornehmbar ist, bis eine Identität oder zugelassene Toleranz der theoretischen und realen Messwerte vorliegt in dessen Ergebnis durch Integration der gemessenen lokalen Neigungswinkelabweichungen die zu bestimmende Formabweichung und Welligkeit ermittelbar sind.

4. Vorrichtung nach Anspruch 3, **dadurch gekennzeichnet, dass** die Beleuchtungseinrichtung durch einen Laser (1) gebildet ist, der räumlich beabstandet und getrennt durch eine Rotationsachse (Y-Y) von einem positionsempfindlichen Empfänger (6a) auf einem Rotationstisch (7a) so angeordnet ist, dass der vom Laser (1) ausgehende Beleuchtungsstrahl (2) unter einem Winkel auf die Oberfläche (3a) der zu vermessenden Freiformfläche ($F_r$) gelangt und der von dort reflektierte Strahl (5a) von einer sensitiven Empfängerfläche (D) eines positionsempfindlichen Empfängers (6a) erfassbar ist, wobei durch Drehung des Rotationstischs (7a) um 180° der gewünschte zweite Beleuchtungsstrahl mit anderem Vorzeichen für den gleichen Tastpunkt, bezogen auf die vorgegebene Tastbahn ($F_0$), generierbar ist.

5. Vorrichtung nach Anspruch 4, **dadurch gekennzeichnet, dass** in Abhängigkeit von der Messaufgabe und/oder gewünschten Genauigkeit die Größe der sensitiven Empfängerfläche (D) und/oder deren Abstand (L) von der zu vermessenden Freiformfläche variabel einstellbar oder vorgebbar sind.

6. Vorrichtung nach Anspruch 3, **dadurch gekennzeichnet, dass** die zwei Beleuchtungsstrahlen (2a, 2b) durch entsprechende Abund Umlenkeinheiten (3, 4, 5) getrennt auf unterschiedliche schräge Flächen eines Prismas (8) derart gerichtet sind, dass sie senkrecht zur Hauptfläche (8a) des Prismas (8) auftreffen und in einem gemeinsamen Punkt auf der zustellbaren Prüflingsoberfläche (11) auftreffen, wobei die von dort reflektierten Strahlen getrennt von positionsempfindlichen Empfängern (9, 10), die den der Hauptfläche (8a) des Prismas (8) abgewandten schrägen Prismenflächen zugeordnet sind erfassbar sind.

7. Vorrichtung nach Anspruch 6, **dadurch gekennzeichnet, dass** das eingesetzte Prisma (8) durch ein Pentaprisma gebildet ist, dessen erster und dritter Prismenwinkel ($\alpha 1$, $\alpha 3$) so gewählt ist, dass die aus der Hauptfläche (8a) austretenden Beleuchtungsstrahlen in einem gemeinsamen zustellbaren Punkt der Prüflingsoberfläche auftreffen, wobei erste und zweite Prismenwinkel ($\alpha 1$, $\alpha 2$), die die Prismenflächen charakterisieren, auf denen die positionsempfindlichen Empfänger (9, 10) angeordnet sind, weiterhin derart gewählt sind, dass bei den entstehenden Einfallswinkeln (01 und 02) der Beleuchtungsstrahlen (2a, 2b) die Empfängerflächen der positionsempfindlichen Empfänger (9, 10) bei idealer ebener in der Tastebene befindliche Oberfläche durch die reflektierten und gebrochenen Lichtbündel senkrecht beleuchtet sind, wobei die Empfängerflächen (9, 10) so auf den schrägen Prismenflächen angeordnet sind, dass unter genannten Voraussetzungen die reflektierten Strahlen in ihrer Nullposition auftreffen.

**Claims**

1. Method for determining departures in form and waviness of continuous faces of free form, **characterized in that** the local displacements of the angle of inclination of the reflections of two light beams which impinge upon the free form face to be measured at different angles to each other as concerns value and/or sign and which are oblique to an ideal surface normal, are recorded and subjected to a mathematical evaluation algorithm in such a manner that it is based on a tessellated model for simulating the real surface profile of the free form surface obtained from the measured displacements of the values of the inclination angles from the two differently reflected light beams, by which due to a successive approximation of theoretically determined inclination angle departures and due to a one to multifold comparison to the real measured inclination angle departures an approximation and re-correction of the tessellated model is carried out until an identity or an admitted tolerance of the theoretical and real measuring values is obtained as a result of which the departure of form and waviness to be determined will be detected by integration of the measured local inclination departures.

2. Method for determining departures in form and waviness of continuous faces of free form as claimed in claim 1, **characterized in that**

   a) a feeler trace ($F_0$) is pre-selected as a macro-profile of and adapted to a free form face ($F_r$) to be measured,
   b) along the feeler trace ($F_0$) each point of the surface ($F_r$) to be measured is scanned in pre-selected scanning steps, simultaneously or subsequently, by two light beams of different angles of impingement,
   c) the respective deviations of the beams resulting from the first and the second light beam reflected on the surface ($F_f$) will be associated simultaneously or subsequently to the respective identical point on the feeler trace ($F_0$) and will be stored in an electronic storage unit,

d) in which by calculation, facets are formed from the two real points of impingement resulting from a scanning point on the feeler trace ($F_0$) compared to the real surface ($F_r$), and the inclination of the facets will be determined,

e) the inclinations of the facets such obtained will be successively in relation to the scanning trace points of the feeler trace ($F_0$) integrated on by computation, from which a theoretical behavior of the profile of the free form face will be formed,

f) subsequently, within the frame of a forward simulation, according to b) the theoretical profile course will be simulated illuminated with the two beams incident under identical angles and the respective associated theoretical deviations of the reflected beams on the detector unite(s) will be computed,

g) subsequently a comparison of the detected deviations from f) and c) will be carried out, wherein in the case of identity of the data records and of falling short, respectively, of a Q-value selectable at will, the theoretical course of the profile derived according to e) corresponds to the course of the profile of the real surface ($F_r$) to be detected, however, at the absence of identity required,

h) beginning with the angle of incidence of the first illumination beam in following point by point the feeler trace ($F_0$), from which the respective deviations are computed from the theoretical course of profile is formed according to e), wherein respective departures of said computed deviation relative to the actual measured deviation of the beam according to c) the associated theoretical inclination of the profile in said point will be re-corrected and

i) an identical re-correction according to h) will also be carried out for the second illumination beam,

j) subsequently from the theoretical curves derived from h) and i) by following the scanning points pattern from these two values which represent the associated inclination of the respective surface elements, the average of the inclination each is formed and by integrating on of these values, again a theoretical surface profile is formed, wherein by said theoretical surface profile obtained the procedure, starting with the step e), is looping again and again until the real surface profile results according to g).

3. Device for determining departures in form and waviness of continuous free form surfaces, **characterized in that** translation means and/or rotation means (4a) are provided for receiving the free form surface and moving forward past the freeform surface relative to a scanning trace ($F_0$) adapted to a macro profile of the freeform face ($F_r$) to be measured in preselectable scanning steps, **in that** an illumination device (1) is provided to produce two light beams (2; 2a, 2b) by suitable optical means (7a; 3, 4, 5, and 8), **in that** the light beams are adapted to impinge slantingly to an ideal surface normal ($\vec{n}_0$) upon the free form face ($F_r$) to be measured under different angles ($\Theta1, \Theta2$), said angles differing from one another as concerns value and/or sign, and **in that** suitable position sensitive detectors (6a. 9, 10) are provided by following the translatory and/or rotational scanning point by point and separately detecting and electronically storing the inclination angles of the beams reflected from the free form surface ($F_r$), and **in that** the device is embodied for subjecting the local departures of the inclination angles of the reflections of two light beams to a mathematical evaluation algorithm, wherein said reflections of two light beams impinge under different angles, differing from one another in value and/or sign, and slantingly to the surface normal upon the free form surface to be measured, in such a manner that said mathematical evaluation algorithm can be based upon a facet model which can be generated from the departures measured from the inclination angle values of the two different reflected light beams to simulate the real free form surface profile, in which by successive approximation of theoretically defined departures of the inclination angles and by a single to multifold comparison to the real measured departures of the inclination angles an approximation to and a re-correction of the facet model is carried out until an identity or an admissible tolerance of the theoretical and real measuring values is obtained as a result thereof by integration of the measured local inclination angle departures the departure in form and waviness to be determined can be detected.

4. Device as claimed in claim 3, **characterized in that** the illumination device is realized by a laser (1) which, being arranged spaced apart and separated by an axis of rotation (Y - Y) from a position sensitive detector (6a) upon a rotary table (7a) in such a manner that the illumination beam (2) emitted by the laser (1) impinges under an angle upon the surface (3a) of the free form surface ($F_r$) to be measured and the beam (5a) reflected thereupon can be detected on a sensitive detector face (D) of a position sensitive detector (6a), in the course of which by rotating the rotary table (7a) by 180° the requested second illumination beam may be generated having a different sign for the same point of scanning related to the given scanning trace ($F_0$).

5. Device as claimed in claim 4, **characterized in that** depending on the measuring task and/or the desired precision the size of the sensitive detector face (D) and/or the distance (L) of the same to the free form face to be measured can be variably set or preselectable.

6. Device as claimed in claim 3, **characterized in that** the two illumination beams (2a, 2b) are directed by respective deflecting and deviation means (3, 4, 5) separately upon differently slanting faces of a prism (8) in such a manner that they impinge at right angles upon the main plane (8a) of the prism (8) and in a common point upon an addable sample surface (11), consequently, the beams having been reflected there, can be detected separately by position sensitive detectors (9, 10) which are coordinated to the slanting prism planes being turned away from the main plane (8a) of the prism (8).

**7.** Device as claimed in claim 6, **characterized in that** the used prism (8) is realized by a pentagonal prism, the first and third prism angles ($\alpha1$, $\alpha3$) of which are such selected that the illumination beams emitted from the main plane (8a) impinge upon a common addable point upon the sample surface, wherein the first and the second prism angle ($\alpha1$, $\alpha2$) which characterize the prism planes upon which the position sensitive detectors (9, 10) are arranged, are furthermore such selected that, with the resulting angles of incidence (01 and 02) of the illumination beams (2a, 2b), the detector faces of the position sensitive detectors (9, 10), are perpendicularly illuminated by the reflected and refracted bundles of light provided that the surface located in the scanning plane is ideally flat, wherein the detector faces (9, 10) are arranged upon the slanting prism planes in such a manner that, under the conditions mentioned, the reflected beams impinge in their zero position.

## Revendications

**1.** Procédé destiné à déterminer les écarts de forme et les ondulations de surfaces continues, est **caractérisé en ce qu'**il doit permettre d'enregistrer et d'évaluer à l'aide d'un algorithme mathématique les écarts angulaires locaux des reflets de deux faisceaux d'éclairage appliqués sur une surface à forme libre à déterminer, sous des angles aux grandeurs et/ou signes différents ainsi que de manière oblique par rapport à la normale idéale de la surface afin d'obtenir qu'un modèle à facettes puisse être généré à partir des écarts angulaires d'inclinaison mesurés des deux faisceaux d'éclairage reflétés servant de base pour reproduire à partir des écarts des valeurs angulaires d'inclinaison réellement mesurés, le profil réel des surfaces à forme libre permettant par voie d'approches successives répétées des écarts des angles d'inclinaison déterminés par voie théorique et par voie d'une ou plusieurs comparaisons avec les écarts des angles d'inclinaison réellement mesurés, de procéder à des corrections ultérieures et rapprochements du modèle à facettes jusqu'à ce que l'identité totale ou au moins une tolérance admise des valeurs théoriques ou réellement mesurées soient atteintes ce qui après intégration des écarts des angles d'inclinaison locaux mesurés, permet de déterminer précisément les écarts de forme et les ondulations.

**2.** Procédé destiné à déterminer suivant la revendication 1 les écarts de forme et les ondulations de surfaces continues à forme libre est **caractérisé en ce que**

a) au profil approximatif est prédéfini un trajet de balayage ($F_0$) adapté à la surface à forme libre à déterminer ($F_r$),
b) tout le long du trajet prédéfini de balayage ($F_0$) chacun des points situés sur la surface à déterminer ($F_r$) est balayé l'un après l'autre dans des étapes prédéfinies soit simultanément soit successivement, moyennant de faisceaux d'éclairage présentant différents angles d'incidence,
c) les déviations respectives des rayons du premier ou deuxième faisceau d'éclairage, réfléchis simultanément ou successivement l'un après l'autre de la surface ($F_r$), sont attribuées aux points correspondants situés sur le trajet de balayage ($F_0$) et mémorisées dans une unité de mémoire électronique,
d) dans l'unité de mémoire, des facettes dont les inclinaisons sont à déterminer, sont formées par voie de calcul à partir des points d'impact de deux faisceaux réels résultant de la comparaison d'un point de balayage situé sur le trajet de balayage ($F_0$) avec la surface réelle ($F_r$),
e) par voie de calcul, les inclinaisons des facettes ainsi déterminées, sont, l'une après l'autre, intégrées à chacun des points de balayage situés sur le trajet de balayage ($F_0$) pour en déduire le tracé théorique du profil de la surface à forme libre,
f) ensuite, dans le cadre d'une simulation en avant, le tracé théorique du profil à deux angles d'incidence identiques selon b), est éclairé par simulation et les déviations théoriques respectives attribuées des faisceaux réfléchis sont définies par voie de calcul par le(s) récepteur(s) afin de définir par voie de calcul au(x) récepteur(s) les déviations théoriques respectives des faisceaux réfléchis,
g) ensuite aura lieu une comparaison des déviations définies suivant f) et c), en cas de l'identité des enregistrements de données ou en cas d'infériorité par rapport à un critère de qualité défini au préalable, le tracé du profil théorique obtenu correspond au tracé du profil à déterminer de la surface réelle ($F_r$), par contre, dans le cas où l'identité requise n'est pas donnée,
h) en commençant par l'angle d'incidence du premier faisceau d'éclairage et en suivant point par point le trajet de balayage ($F_0$), sont calculés les déviations respectives à partir du tracé du profil théorique obtenu suivant e), en veillant à ce que dans le cas d'un écart du faisceau d'éclairage calculé de la déviation réelle du faisceau mesurée selon c) au point respectif, l'inclinaison théorique afférente doit être corrigée,

i) concernant le deuxième faisceau d'éclairage il faut également procéder à une correction ultérieure identique suivant h),

j) ensuite, à partir des courbes théoriques définies selon h) et i), en suivant la trame des points de balayage, et à partir des deux valeurs représentant les inclinaisons respectives des éléments de surface en question, chaque fois est formée la moyenne des inclinaisons et par intégration de ces valeurs il est possible de former chaque fois à nouveau un profil théorique de la surface, avec ce nouveau profil théorique établi de la surface, la procédure est répétée en commençant par l'étape e), jusqu'à ce que le profil réel de la surface selon g) soit obtenu.

3. Dispositif destiné à définir les déviations et ondulations les surfaces continues à forme libre est **caractérisé en ce que** l'on prévoit des moyens de translation et/ou de rotation (4a) permettant dans le profil approximatif de saisir et de faire passer la surface à forme libre ($F_r$) point par point et de manière prédéfinie, devant le trajet de balayage ($F_0$) adapté à la surface à forme libre ($F_r$) à déterminer, et qu'un dispositif d'éclairage (1) est mis en place pour générer deux faisceaux d'éclairage (2; 2a, 2b) à l'aide de moyens optiques appropriés (7a; 3, 4, 5 et 8), de sorte que les faisceaux d'éclairage puissent irradier la surface à forme libre ($F_r$) à déterminer sous différents angles ($\Theta 1$, 02) se distinguant quant à leurs grandeurs et/ou signes et de manière oblique par rapport à la normale idéale de la surface ($\vec{n}_0$), et que des récepteurs appropriés capables à réagir de manière sensibles aux positions (6a, 9, 10) sont mis en place pour saisir et enregistrer individuellement, point par point, par balayage translatoire ou rotatif, les angles d'inclinaison des faisceaux réfléchis de la surface à forme libre ($F_r$), et que le dispositif est conçu de sorte de pouvoir soumettre à un algorithme d'évaluation les déviations des angles d'inclinaison locaux des reflets de deux faisceaux d'éclairage destinés à irradier la surface à forme libre ($F_r$) à déterminer sous des angles se distinguant quant à leurs grandeurs et /ou leurs signes, et de manière oblique par rapport à la normale idéale de la surface de sorte que la surface à forme libre ($F_r$) à déterminer puisse être irradiée avec des faisceaux d'éclairage sous différents angles, de manière que finalement l'algorithme puisse se baser sur un modèle à facettes généré à partir des déviations des angles d'inclinaison mesurées de deux différents faisceaux d'éclairage réfléchis permettant de reproduire le profil réel de la superficie de la surface à forme libre permettant ainsi à s'approcher successivement des écarts des angles d'inclinaison théoriquement déterminés et en les comparant une ou plusieurs fois aux écarts des angles d'inclinaisons réellement mesurés, et de répéter cette procédure jusqu'à ce que par rapprochement et correction ultérieure du modèle à facettes, une identité ou une tolérance admissible des valeurs de mesure théoriques et réelles soit obtenue ce qui permet par intégration des écarts locaux des angles d'inclinaison, d'obtenir l'écart de forme et l'ondulation à déterminer.

4. Dispositif selon la revendication 3 est **caractérisé en ce que** l'équipement d'éclairage est constitué par un laser (1) étant placé sur une table pivotante (7a) à une certaine distance d'un récepteur (6a) sensible à la position et séparé de celui-ci par un axe de rotation (Y-Y), de manière que le faisceau d'éclairage (2) émanant du laser (1) sous un certain angle, puisse irradier la superficie (3a) de la surface à forme libre ($F_r$) à déterminer de sorte que le faisceau réfléchi (5a) puisse être capté par la zone de réception sensible (D) d'un récepteur sensible à la position (6a), ce qui permet ainsi en tournant la table rotatif (7a) de 180°, de générer avec un autre signe pour le même point de balayage au trajet de balayage ($F_0$) prédéterminé, le deuxième faisceau d'éclairage requis.

5. Dispositif selon la revendication 4 est **caractérisée en ce que** en fonction de l'opération de mesure et/ou de la précision requise, la grandeur de la zone de réception sensible (D) et/ou sa distance (L) par rapport à la surface à forme libre à déterminer sont réglables ou prédéfinissables de façon variable.

6. Dispositif selon la revendication 3 est **caractérisé en ce que** des unités respectives de déviation et de renvoi (3, 4, 5) permettent d'orienter individuellement l'impact de deux faisceaux (2a, 2b) sur différentes surfaces obliques d'un prisme (8) de sorte qu'ils atteignent la surface principale (8a) du prisme (8) de manière perpendiculaire au même point de la surface de l'échantillon mis en position aux fins de mesures (11) ce qui permet de saisir séparément les faisceaux réfléchis par des récepteurs sensibles à la position (9,10) attribués aux surfaces obliques du prisme se trouvant en position opposée à la surface principale (8a) du prisme.

7. Dispositif selon la revendication 6 est **caractérisé en ce que** le prisme implanté (8) est un pentaprisme dont le premier et le troisième angle prismatique_($\alpha 1$, $\alpha 3$) sont choisis de sorte que les faisceaux d'éclairage sortant de la surface principale (8a) atteignent au même point réglable la surface de l'échantillon mis en position de mesure de façon que le premiers et les deuxièmes angles prismatiques ($\alpha$1, $\alpha$2), caractérisant les surfaces du prisme sur lesquelles les récepteurs sensibles à la position (9, 10) sont disposés, puissent toujours être choisis de sorte que les surfaces des récepteurs sensibles à la position (9, 10) sont éclairées perpendiculairement par des faisceaux d'éclairage (2a, 2b) réfléchis et réfractés aux angles d'incidence (01 et 02) en présence d'une planéité idéale de la surface sur le trajet de balayage, les zones de réception (9, 10) étant disposées sur les surfaces prismatiques obliques de façon que enfin dans des conditions précitées l'impact des faisceaux réfléchies ait lieu à leur position zéro.

Fig. 1

Stand der Technik

Fig. 2

Fig. 3

Fig. 4

Fig. 5

Fig. 6

Fig. 7

Fig. 8

Fig. 9

Fig. 10

Fig. 11

**IN DER BESCHREIBUNG AUFGEFÜHRTE DOKUMENTE**

**In der Beschreibung aufgeführte Patentdokumente**

- US 5424834 A
- WO 03056305 A1

- DE 19842190 C1
- DE 19833269 C1

**In der Beschreibung aufgeführte Nicht-Patentliteratur**

- **REICHELT, S. ; PRUSS, C. ; TIZIANI, H.J.** Absolute interferometric test of aspheres by use of twin computer-generated holograms. *Appl. Optics,* 2003, vol. 42 (22), 4468-4479
- **ELSTER,C. ; WEINGÄRTNER,I.** Solution to the shearing problem. *Applied Optics,* 1999, vol. 38 (23), 5024-5031

- **KNAUER,M.C. ; BOTHE,T. ; LOWITZSCH,S. ; JÜPTNER,W. ; HÄUSLER,G. ; HÖHE.** Neigung oder Krümmung?. *DgaO-Proceedings,* 2006, 107